(19) Europäisches Patentamt
European Patent Office
Office européen des brevets

(11) **EP 3 913 344 B1**

(12) **EUROPEAN PATENT SPECIFICATION**

(45) Date of publication and mention of the grant of the patent:
**18.02.2026 Bulletin 2026/08**

(21) Application number: **21175005.4**

(22) Date of filing: **20.05.2021**

(51) International Patent Classification (IPC):
*F16B 35/04* (2006.01)  *G01B 7/16* (2006.01)
*F16B 35/00* (2006.01)  *F16B 5/06* (2006.01)
*F16B 31/02* (2006.01)  *G01L 5/00* (2006.01)
*G01M 5/00* (2006.01)  *G01L 1/22* (2006.01)

(52) Cooperative Patent Classification (CPC):
**G01L 1/2218; F16B 5/0642; F16B 35/048; G01L 5/0071; G01M 5/0041; G01M 5/0083;** F16B 2031/022; G01B 7/18; Y02E 10/72

(54) **WIND TURBINE DRIVING DEVICE AND WIND TURBINE**

WINDTURBINENANTRIEBSVORRICHTUNG UND WINDTURBINE

DISPOSITIF D'ENTRAÎNEMENT D'ÉOLIENNE ET ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2020 JP 2020089055**

(43) Date of publication of application:
**24.11.2021 Bulletin 2021/47**

(73) Proprietor: **Nabtesco Corporation Tokyo (JP)**

(72) Inventors:
• **NOHARA, Osamu**
  **Tokyo (JP)**
• **ASAKAWA, Yuichi**
  **Tokyo (JP)**

(74) Representative: **Grünecker Patent- und Rechtsanwälte PartG mbB Leopoldstraße 4 80802 München (DE)**

(56) References cited:
EP-A1- 3 550 141    WO-A1-2019/240012
GB-A- 2 030 300    US-A- 4 553 124
US-A1- 2015 247 520    US-A1- 2017 315 013

## Description

## TECHNICAL FIELD

The present invention relates to a wind turbine driving device and a wind turbine.

## BACKGROUND

EP 3 550 141 A1 discloses a wind turbine driving device in which a bolt-type sensor device is used for fixing a driving device body to a structure. US 4 553 124 A discloses a bolt-type sensor device having an intermediate axial portion being thinner than a threaded portion. As disclosed in, for example, JP2019-215272A (the '272 Publication), a bolt is known that is capable of detecting a drop in fastening force. Bolts of this type have, for example, inside them, a detecting unit such as a strain gauge provided for detecting a drop in fastening force. The output from the detecting unit can be used to monitor a significant drop in, for example, axial force, thereby detecting unacceptable loosening of the bolts. The '272 Publication is designed to prevent a drop in the strength of the bolts that may be caused by the provision of the detecting unit, so that the bolts can accomplish its intended use.

As disclosed in JP2016-211497A (the '497 Publication), on the other hand, it has been confirmed that, when a bolt is used to fasten a fastening target object, the condition of the fastening target object may be evaluated by measuring a physical change experienced by the bolt, thereby detecting a change in load applied to the bolt.

As a result of careful examination, however, the inventors of the present invention have found that a change in load that is required to be detected in order to prevent future damage and destruction of the fastening target object is rather small when compared with the load applied to the bolt when the fastening target object is appropriately fastened using the bolt. Here, since the conventional bolt disclosed in the 272 Publication can serve as a highly strong fastening unit, the conventional bolt having the detecting unit is unlikely to experience a large change in its physical properties. For the reasons stated above, the conventional bolt provided with the detecting unit is not capable of sensitively detecting a slight change in load that needs to be detected in order to prevent future damage and destruction of the fastening target object.

## SUMMARY

The present invention addresses the above problem. One of the objects of the present invention is to provide a bolt-type sensor device capable of highly accurately evaluating the condition of a wind turbine driving device.

According to the present invention, a wind turbine driving device according to claim 1 is provided. A bolt-type sensor device according to the claimed invention includes:

a top end portion having a threaded portion;
a bolt head portion thicker than the threaded portion;
an intermediate axial portion positioned between the top end portion and the bolt head portion, where the intermediate axial portion is thinner than the threaded portion; and
a physical change detecting unit provided on the intermediate axial portion, where the physical change detecting unit is configured to detect a physical change experienced by the intermediate axial portion, the intermediate axial portion has a plurality of placement surfaces that are positioned at the same position in an axial direction and that are flat surfaces parallel to the axial direction, wherein the plurality of placement surfaces are symmetrically positioned with respect to a central axis, and wherein the plurality of placement surfaces each have the physical change detecting unit provided thereon.

## BRIEF DESCRIPTION OF THE DRAWINGS

Fig. 1 is a perspective view showing a wind turbine for explaining one embodiment of the present invention.
Fig. 2 is a longitudinal sectional view of the wind turbine shown in Fig. 1, which shows a moving part between a tower and a nacelle.
Fig. 3 is a plan view showing how wind turbine driving devices are arranged in the moving part shown in Fig. 2.
Fig. 4 is a view of one of the wind turbine driving devices shown in Fig. 2, part of which is shown in longitudinal section.
Fig. 5 is a view of a mounting part of the wind turbine driving device shown in Fig. 4, part of which is shown in longitudinal section.
Fig. 6 is a perspective view illustrating a bolt body included in a bolt-type sensor device.
Fig. 7A is a partial enlarged view of Fig. 5 and a longitudinal sectional view for illustrating a fastening structure including the bolt-type sensor device.
Fig. 7B is a longitudinal sectional view corresponding to Fig. 7A and shows the fastening structure including the bolt-type sensor device seen from a different direction.
Fig. 8 corresponds to Fig. 6 and shows a bolt body included in a modification example of the bolt-type sensor device.
Fig. 9 corresponds to Figs. 7A and 7B and shows a fastening structure including the bolt-type sensor device of Fig. 8.
Fig. 10 corresponds to Figs. 7A and 7B and shows a fastening structure including a different modification example of the bolt-type sensor device.

Fig. 11 corresponds to Figs. 7A and 7B and shows a fastening structure including a further different modification example of the bolt-type sensor device.

## DESCRIPTION OF THE PREFERRED EMBODIMENTS

One embodiment of the invention will be hereinafter described with reference to the attached drawings. In the attached drawings, the dimensions and aspect ratios may be appropriately altered for emphasis, so as to facilitate illustration and comprehension of the drawings.

The bolt-type sensor device described in the following is used as a sensor device capable of highly accurately evaluating the condition of a fastening target object. The bolt-type sensor device includes a bolt body having a shape of a bolt and a physical change detecting unit for detecting a physical change experienced by the bolt body. A bolt-type sensor device relating to the following embodiment is configured to highly sensitively detect a physical change experienced by the bolt body, thereby detecting a slight change in condition of the bolt body. By detecting a physical change experienced by the bolt body, the bolt-type sensor device is capable of highly accurately evaluating the magnitude of the force applied to a fastening structure including the sensor device and the deformation of the fastening structure. The following embodiment is described with reference to an example case where the bolt-type sensor device is used in a wind turbine, in particular, a wind turbine driving device. The bolt-type sensor device relating to the present embodiment is, however, applicable not only to the following example but also to various types of fastening structures.

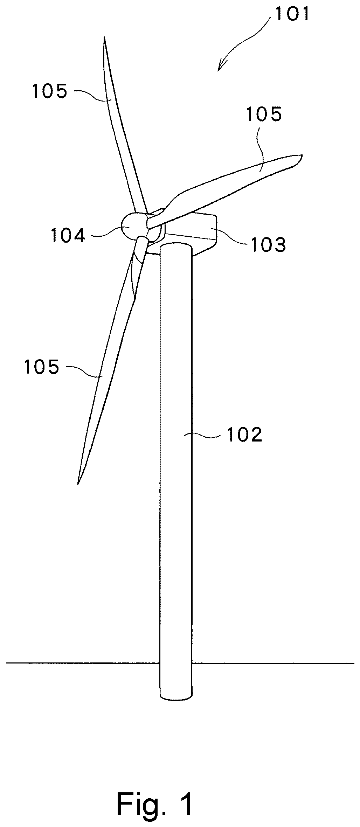

As shown in Fig. 1, a wind turbine 101 includes a tower 102, a nacelle 103, a rotor 104 that is a main shaft portion, a blade 105, and the like. The tower 102 is installed such that it extends vertically upward from the ground. The nacelle 103 is installed on the top of the tower 102 such that the nacelle 103 is rotatable relative to the tower 102. The nacelle 103 rotates relative to the tower 102 about the longitudinal direction of the tower 102, which is so-called yaw rotation. The rotation of the nacelle 103 is around a rotational axis parallel to the normal vertical direction. The nacelle 103 has a power transmission shaft, a generator, and the like disposed therein. The rotor 104 is connected to the power transmission shaft and is rotatable relative to the nacelle 103. A plurality of blades 105 (three blades 105 in the example shown in Fig. 1) are provided. The blades 105 extend from the rotor 104 in a radial direction about the axis of the rotation of the rotor 104 relative to the nacelle 103. The blades 105 are arranged at equal angular intervals. Each of the blades 105 is rotatable in the pitch direction, in other words, rotatable about a longitudinal direction thereof relative to the rotor 104. That is, the blades 105 are connected to the rotor 104 via a moving part.

A wind turbine driving device is used as a yaw drive that provides yawing of the nacelle 103 relative to the tower 102. The wind turbine driving device is also used as a pitch drive that provides pitching of the axial portion of the blades 105 relative to the rotor 104. The pitch drive is fixedly attached to the rotor 104 using a plurality of bolts B, at least some of which are bolt-type sensor devices 30, described below. The following describes in detail a wind turbine driving device and a structure to fixedly attaching the wind turbine driving device, assuming that the wind turbine driving device is used as a yaw drive.

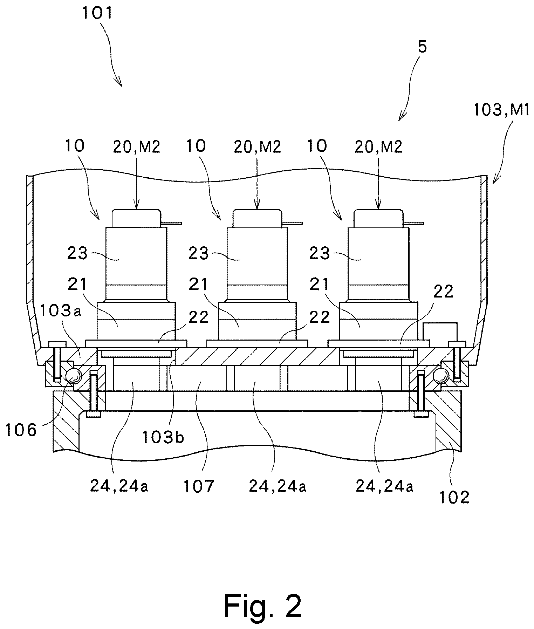

Fig. 2 is a longitudinal sectional view showing a wind turbine, showing in an enlarged view a portion thereof where the nacelle 103 is installed rotatably relative to the tower 102. In Fig. 2, wind turbine driving devices 10 are shown not in sectional view but in outside view. The nacelle 103 is installed on the top of the tower 102 such that the nacelle 103 is rotatable relative to the tower 102 via a bearing 106 interposed between a bottom portion 103a of the nacelle 103 and the tower 102. A ring gear 107 having internal teeth formed on its inner periphery is fixed to the top of the tower 102. Note that the teeth of the ring gear 107 are not necessarily provided on the inner periphery of the ring gear 107 and may be alternatively provided on the outer periphery of the ring gear 107. In the drawings, the internal teeth of the ring gear 107 are not shown.

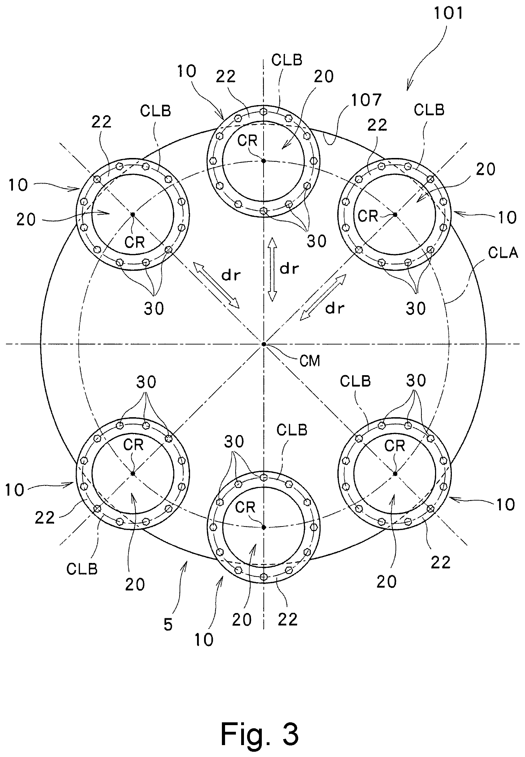

As shown in Figs. 2 and 3, a plurality of wind turbine driving devices 10 are mounted in the nacelle 103. The wind turbine driving devices 10 each include a meshing portion 24a meshing with the internal teeth of the ring gear 10. By driving the wind turbine driving devices 10, it becomes possible to rotate the nacelle 103, which is one of the moving parts of the wind turbine 101, relative to the tower 102, which is the other of the moving parts of the wind turbine 101. As shown in Fig. 3, the ring gear 107 is formed in an annular shape and has a center axis CM. The nacelle 103 rotates about the center axis CM of the ring gear 107. In the example shown, the center axis CM of the ring gear 107 is parallel to the longitudinal direction of the tower 102.

In the wind turbine 101 shown, as shown in Fig. 3, a pair of wind turbine driving device units 5 is provided. The wind turbine driving device units 5 are arranged in rotational symmetry about the center axis CM of the ring gear 107. Each wind turbine driving device unit 5 includes three wind turbine driving devices 10. In total, six driving device bodies 20 are included in the pair of wind turbine driving device units 5 and arranged along a circumference CLA (see Fig. 3) of a circle centered on the center axis CM of the ring gear 107. The three wind turbine driving devices 10 included in each of the wind turbine driving device units 5 are arranged sequentially at given intervals along the circumference CLA.

The wind turbine driving devices 10 each include a driving device body 20 and one or more bolt-type sensor devices 30. The driving device body 20 is fixedly attached to the nacelle 103 using bolts B. The bolt-type sensor devices 30 replace one or more of the bolts B that are normally used to fixedly attach the driving device body 20 to the nacelle 103. Stated differently, the bolt-type sensor devices 30 can serve to fasten together the nacelle 103 and the driving device body 20. The bolt-type sensor devices 30 each include a bolt body 30A and a physical change detecting unit 40. The bolt body 30A is configured to fasten the driving device body 20 to the nacelle 103, like common bolts. The physical change detecting unit 40 can highly sensitively detect a slight change in the condition of the driving device body 20, which is a fastening target object, by detecting a physical change experienced by the bolt body 30A. In other words, the results of the detection made by the physical change detecting unit 40 can be used to measure a physical change in the bolt body 30A. In addition, by monitoring the physical change experienced by the bolt body 30A, it can be immediately and accurately detected whether irregularity occurs in the driving device body 20. The following describes the constituent elements of each wind turbine driving device 10 one by one.

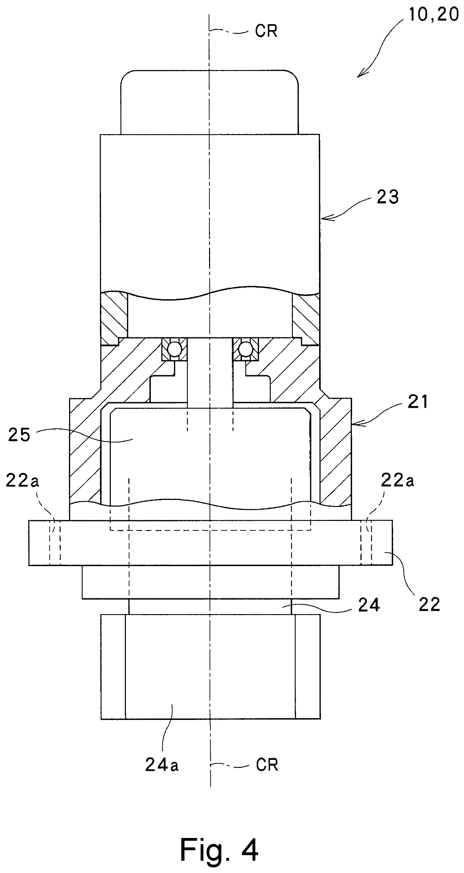

As shown in Fig. 4, the driving device body 20 includes an output shaft 24 having the meshing portion 24a meshing with the ring gear 107, a case 21 rotatably retaining the output shaft 24, and an electric motor 23 fixed to the case 21. The driving device body 20 further includes a connection portion 25 connecting the electric motor 23 to the output shaft 24. The connection portion 25 is housed in the case 21. As one example, the connection portion 25 decelerates an input from the electric motor 23 and transmits the decelerated input to the output shaft 24. The connection portion 25, which is described above and constitutes a reducer unit, can be an eccentric oscillating gear-type speed reducing mechanism, a planetary gear-type speed reducing mechanism, or a speed reducing mechanism combining the eccentric oscillating gear-type and the planetary gear-type.

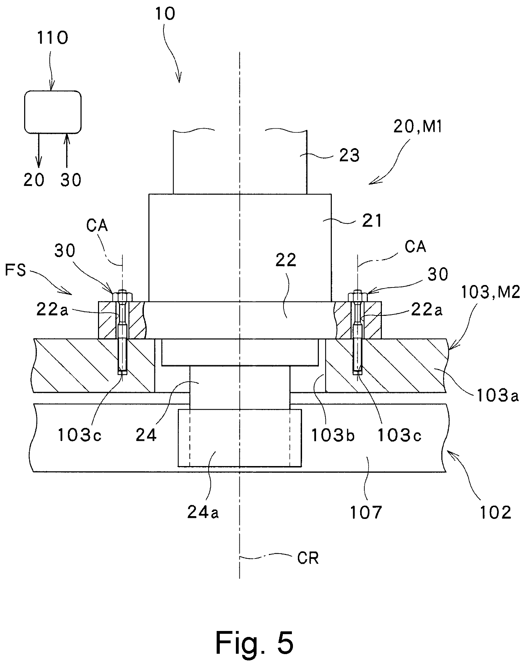

As shown in Fig. 4, an end portion of the output shaft 24, which is spaced away from the connection portion 25, extends out from the case 21. The meshing portion 24a is formed at a portion of the output shaft 24, the part extending out from the case 21. As shown in Figs. 2 and 5, the meshing portion 24a of the output shaft 24 extends into a through hole 103b formed through the bottom portion 103a of the nacelle 103 and meshes with the ring gear 107. The meshing portion 24a is formed in a shape adapted to the ring gear 107. As one example, the meshing portion 24a forms a pinion gear having external teeth configured to mesh with the internal teeth of the ring gear 107. The wind turbine driving devices 10 each have a longitudinal axis parallel to a rotational axis CR of the output shaft 24. The rotational axis CR of the wind turbine driving device 10 is parallel to the central axis CM of the ring gear 107.

Next, the case 21 will be now described. As shown in Fig. 4, the case 21 is formed in a tubular shape. As shown in Fig. 5, the case 21 is arranged such that the longitudinal axis thereof is positioned on the rotational axis CR. The case 21 is open at both ends thereof in the direction along the rotational axis CR. The meshing portion 24a of the output shaft 24 is exposed through the opening of the case 21 facing the tower 102. The electric motor 23 is mounted to the opening of the case 21 facing away from the tower 102. Furthermore, the case 21 includes a flange 22. As shown in Fig. 3, the flange 22 is formed in an annular shape and extends along a circumference CLB of a circle centered on the rotational axis CR of the output shaft 24. As shown in Figs. 4 and 5, a through hole 22a is formed through the flange 22. A multitude of through holes 22a are formed on a circumference of a circle centered on the rotational axis CR of the output shaft 24. In the example shown, twelve through holes 22a are arranged at equal intervals on the circumference CLB. As shown in Figs. 4 and 5, the through holes 22a extend parallel to the rotational axis CR of the output shaft 24.

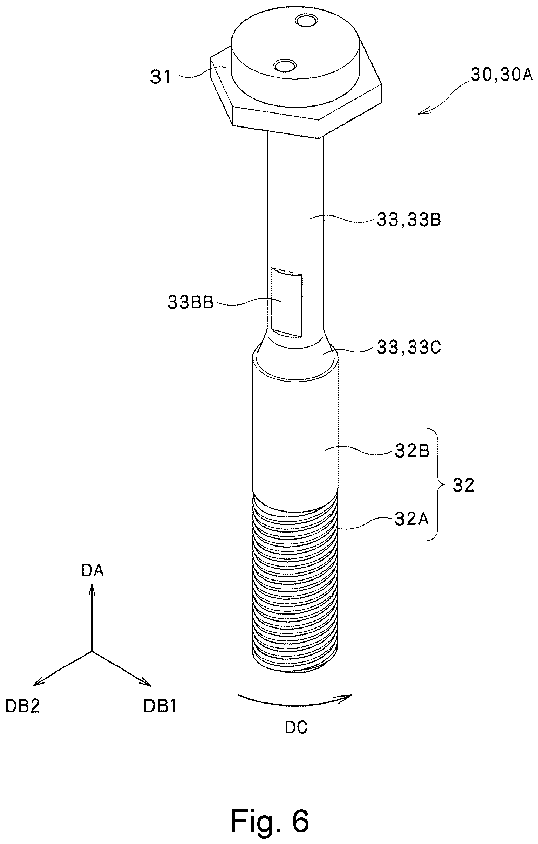

Next, the bolt-type sensor device 30 will now be described mainly with reference to Figs. 6 to 7B. The bolt-type sensor device 30 is used to fixedly attach the driving device body 20 configured as above to the nacelle 103. The bolt-type sensor device 30 also serves as a fastening tool, and constitutes a fastening structure FS when combined with a first member M1 having a through hole provided therein through which the bolt-type sensor device 30 passes and a second member M2 having a threaded hole provided therein, which is configured to mesh with a top end portion 32 of the bolt-type sensor device 30. In the example illustrated, the driving device body 20 constitutes the first member M1, and the through holes 22a provided in the flange 22 of the driving device body 20 serve as the through hole in the first member M1. The nacelle 103 constitutes the second member M2, and a threaded hole 103c in the nacelle 103 serves as the threaded hole in the second member M2.

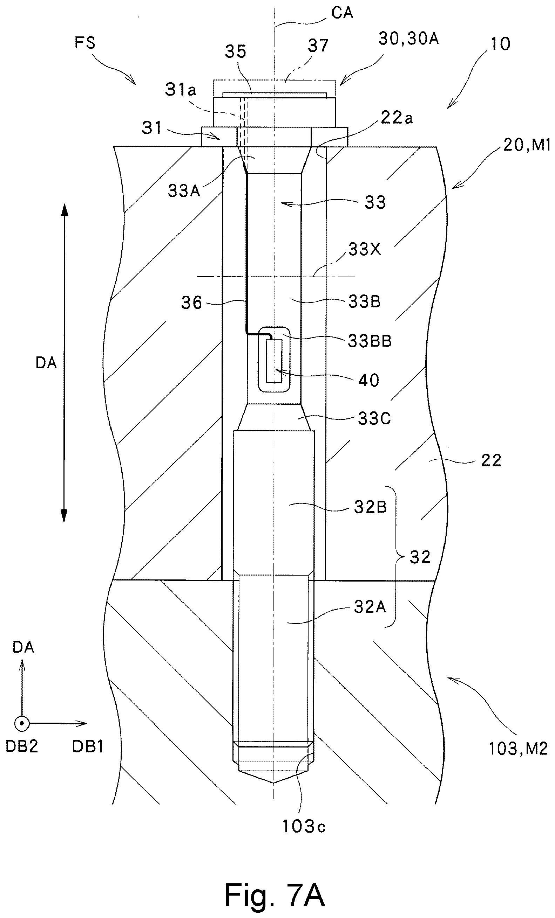

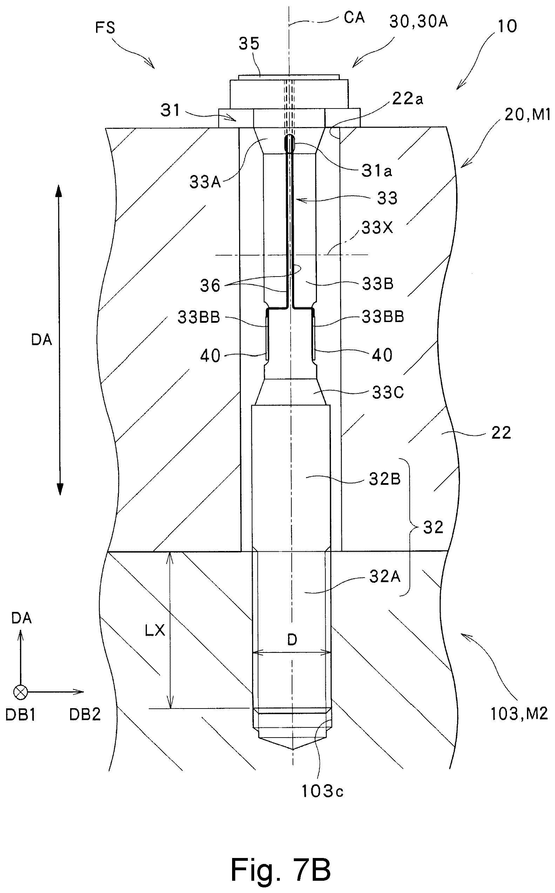

As shown in Figs. 6 to 7B, the bolt-type sensor device 30 includes a bolt body 30A that can be divided into a bolt head portion 31, a top end portion 32 and an intermediate axial portion 33. The top end portion 32 has a threaded portion 32A that is externally threaded. The intermediate axial portion 33 is interposed between the bolt head portion 31 and the top end portion 32. As shown in Figs. 7A and 7B, the bolt head portion 31, intermediate axial portion 33 and top end portion 32 are arranged in this order in the direction along the central axis CA of the bolt-type sensor device 30. The central axis CA of the bolt-type sensor device 30 is parallel to the direction in which the bolt-type sensor device 30 moves relative to the first and second members M1 and M2 when fastened by rotating. The central axis CA of the bolt-type sensor device 30 is parallel to the rotational axis CR of the output shaft 24. In the following description, an axial direction DA refers to the direction parallel to the central axis CA of the bolt-type sensor device 30. In addition, a first direction DB1 and a second direction DB2 denote the directions orthogonal to the axial direction DA and to each other.

Furthermore, a circumferential direction DC refers to the direction extending along the circumference or circular arc of a circle centered around the central axis CA. The following describes the constituent elements of the bolt body 30A.

For the purposes of clearly defining the directions among more than one drawing, the axial direction DA, first direction DB1 and second direction DB2 are shown in some of the drawings as the common directions among the drawings. Each direction is indicated by an arrow, which points one side in the direction. As shown in Fig. 7A, for example, a circled dot indicates an arrow directed frontward from the plane of the paper in the direction vertical to the plane of the paper. As shown in Fig. 7B, for example, a circled cross indicates an arrow directed backward from the plane of the paper in the direction vertical to the plane of the paper.

As shown in Figs. 7A and 7B, the bolt head portion 31 is thicker than the intermediate axial portion 33 and top end portion 32. In other words, the width of the bolt head portion 31 in any direction orthogonal to the axial direction DA is larger than the width of the intermediate axial portion 33 or the top end portion 32 in this direction. Stated differently, the bolt head portion 31 has an enlarged diameter when compared with the intermediate axial portion 33 and top end portion 32. Furthermore, when projected in the axial direction DA, the intermediate axial portion 33 and top end portion 32 are entirely accommodated within a region overlapping the bolt head portion 31. The maximum width of the bolt head portion 31 is larger than the inner diameter of the through holes 22a in the flange 22. This means that the bolt head portion 31 is not allowed to pass through the through hole 22a in the flange 22. Accordingly, when the bolt-type sensor device 30 is fastened, the bottom surface of the bolt head portion 31 touches the top surface of the flange 22.

As described above, the top end portion 32 has the threaded portion 32A. As shown in Figs. 7A and 7B, the threaded portion 32A has external threads configured to mesh with the threaded hole 103c in the nacelle 103. In the example shown, the top end portion 32 further has an axial portion 32B continuous from the bolt head portion 31 side of the threaded portion 32A. The axial portion 32B is shaped like a circular column. As shown in Figs. 6, 7A and 7B, the threaded portion 32A is positioned in the bolt-type sensor device 30 furthest from the bolt head portion 31. The axial portion 32B is connected, on the side thereof opposite to the side connected to the threaded portion 32A, to the intermediate axial portion 33.

As shown in Figs. 6 to 7B, the intermediate axial portion 33 is a portion substantially shaped like a circular column extending along the axial direction DA. As has been described above, the intermediate axial portion 33 is interposed between the bolt head portion 31 and the top end portion 32. The intermediate axial portion 33 is thinner than the bolt head portion 31 and the top end portion 32. In other words, the width of the intermediate axial portion 33 in any direction orthogonal to the axial direction DA is smaller than the width of the bolt head portion 31 or the top end portion 32 in this direction. Stated differently, the intermediate axial portion 33 has a reduced diameter when compared with the bolt head portion 31 and the top end portion 32. Furthermore, when projected in the axial direction DA, the intermediate axial portion 33 is entirely accommodated within a region overlapping the bolt head portion 31 and the top end portion 32. The maximum width of the intermediate axial portion 33 is smaller than the inner diameter of the through holes 22a in the flange 22. Accordingly, the intermediate axial portion 33 is allowed to pass through the through hole 22a in the flange 22.

In the illustrated example, the intermediate axial portion 33 is divided into a base-end-side widened portion 33A, a body portion 33B, and a top-end-side widened portion 33C. In the illustrated example, in particular, the intermediate axial portion 33 is constituted only by the base-end-side widened portion 33A, body portion 33B, and top-end-side widened portion 33C. The base-end-side widened portion 33A, body portion 33B, and top-end-side widened portion 33C are arranged in this order in the axial direction DA from the bolt head portion 31 side toward the top end portion 32 side. This means that the base-end-side widened portion 33A is adjacent to the bolt head portion 31. The top-end-side widened portion 33C is adjacent to the top end portion 32.

The width of the base-end-side widened portion 33A in the direction orthogonal to the axial direction DA gradually increases toward the bolt head portion 31 in the axial direction DA. Accordingly, the base-end-side widened portion 33A has the largest width in a region thereof connected to the bolt head portion 31 and the smallest width in a region thereof most distant from the bolt head portion 31 in the axial direction DA. As shown in Figs. 7A and 7B, a through hole 31a penetrates the bolt head portion 31 and is open at the base-end-side widened portion 33A. The base-end-side widened portion 33A has a circular cross-section when cut along a plane orthogonal to the axial direction DA, except for a portion where the through hole 31a is formed. The width of the top-end-side widened portion 33C in the direction orthogonal to the axial direction DA gradually increases toward the top end portion 32 in the axial direction DA. Accordingly, the top-end-side widened portion 33C has the largest width in a region thereof connected to the top end portion 32 and the smallest width in a region thereof most distant from the top end portion 32 in the axial direction DA. The top-end-side widened portion 33C has a circular cross-section when cut along a plane orthogonal to the axial direction DA.

The body portion 33B is generally shaped like a circular column. Note that, however, the illustrated body portion 33B has a placement surface 33BB, which is a missing or depressed portion of the cylindrical side surface of the circular column. As can be understood from Fig. 7B, the placement surface 33BB is a flat surface parallel to the axial direction DA. In the example shown, a perpendicular line to the placement surface 33BB is orthogonal to the central axis CA of the bolt body 30A. In other words, the placement surface 33BB is a flat surface orthogonal to the radial direction of the circle centered on the central axis CA.

In order to highly sensitively detect the physical change experienced by the bolt body 30A, the body portion 33B has a plurality of placement surfaces 33BB positioned at the same position in the axial direction DA. The plurality of placement surfaces 33BB are positioned at the same position in the axial direction DA. Furthermore, the plurality of placement surfaces 33BB are symmetrically positioned with respect to the central axis CA. The body portion 33B shown in Figs. 6 to 7B has a pair of placement surfaces 33BB opposing each other in the first direction DB1 orthogonal to the axial direction DA. As shown in Fig. 7B, these placement surfaces 33BB are positioned at the same position in the axial direction DA. The width of the body portion 33B in the second direction DB2, which is the direction of the normal to the placement surfaces 33BB, takes a minimum value in a region defined in the axial direction DA and where the placement surfaces 33BB are positioned. The placement surfaces 33BB are between the top end portion 32 and a middle 33X of the body portion 33B in the axial direction DA.

The bolt body 30A is fixedly attached onto the nacelle 103 by allowing the threaded portion 32A of the top end portion 32 to pass through the through hole 22a in the flange 22 and resultantly to mesh with the threaded hole 103c formed in the nacelle 103. When the bolt body 30A is fixedly attached onto the nacelle 103, the bottom surface of the bolt head portion 31 touches the top surface of the flange 22. As a result, the flange 22 is sandwiched between the nacelle 103 and the bolt head portion 31 and compressed, so that the driving device body 20 including the flange 22 can be fixedly attached to the nacelle 103. In the above manner, the bolt body 30A can serve as the bolt B fastening the driving device body 20. Here, the intermediate axial portion 33 is positioned within the through hole 22a in the flange 22 and therefore acted upon by a tensile force that results from the fastening and acts in the axial direction DA. In other words, when the bolt-type sensor device 30 is fastened, the intermediate axial portion 33 of the bolt-type sensor device 30 is positioned in the hole formed in the first member M1 of the fastening structure FS and acted upon by a load.

In the bolt body 30A configured in the above manner, the bolt head portion 31, the top end portion 32 and intermediate axial portion 33 are made of steel or the like and formed integrally. The intermediate axial portion 33 having a reduced diameter and the placement surfaces 33BB formed as a missing or depressed portion may be formed by cutting or shaped by casting.

The following describes the physical change detecting unit 40. In the bolt-type sensor device 30, the physical change detecting unit 40 is positioned on the intermediate axial portion 33 of the bolt body 30A. The physical change detecting unit 40 is configured to detect a physical change experienced by the intermediate axial portion 33 of the bolt body 30A.

The physical change detecting unit 40 can be configured as a variety of units for detecting a physical change and is not limited to any particular configuration. The physical change to be detected by the physical change detecting unit 40 is not limited to any particular change and can be, for example, tensile deformation, compression deformation, bending deformation, torsion deformation, shear deformation. The physical change detecting unit 40 for detecting a physical change experienced by the bolt body 30A is not limited to any particular configuration and can be configured in an appropriate manner determined by a physical change to be detected. For example, the physical change detecting unit 40 can be a position sensor, an ultrasonic range finder, a capacitance distance meter, an optical distance sensor, a displacement sensor or the like.

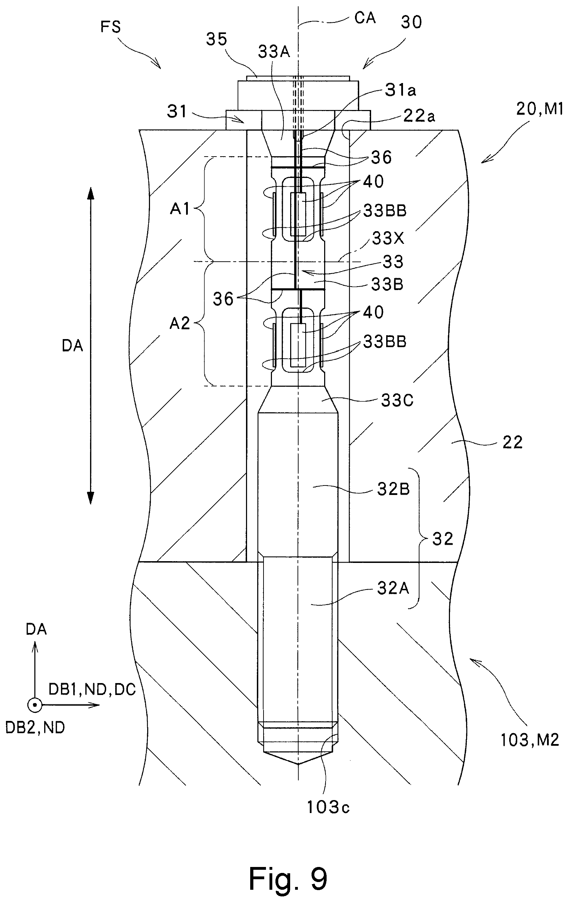

In the example shown, the physical change detecting unit 40 includes a strain sensor provided on the intermediate axial portion 33. The strain sensor is capable of detecting a change in electric resistance caused by deformation of the region on which the strain sensor is arranged, thereby obtaining information relating to the strain of the region. In the example shown, the strain sensor constituting the physical change detecting unit 40 is provided on the body portion 33B of the intermediate axial portion 33. More specifically, as shown in Fig. 7B, the illustrated physical change detecting unit 40 includes a pair of strain sensors provided on the pair of placement surfaces 33BB. As best shown in Fig. 7A, the placement surfaces 33BB are rectangularly shaped correspondingly to the physical change detecting unit 40. Note that Fig. 6 and Fig. 9, which is referred to below, do not show the physical change detecting unit 40.

Furthermore, the bolt-type sensor device 30 has an amplifier circuit board 35 electrically connected to the physical change detecting unit 40. In the example shown, the amplifier circuit board 35 is provided on the bolt head portion 31. More accurately, the amplifier circuit board 35 is provided on the surface of the bolt head portion 31 facing away from the intermediate axial portion 33. When projected in the axial direction DA, the amplifier circuit board 35 is accommodated within a region overlapping the bolt head portion 31. In other words, the amplifier circuit board 35 has no portion protruding beyond the bolt head portion 31 in the direction orthogonal to the central axis CA of the bolt-type sensor device 30. If the amplifier circuit board 35 is arranged in this manner, the amplifier circuit board 35 can effectively avoid touching external elements. Consequently, the bolt-type sensor device 30 can be effectively prevented from being damaged.

In the illustrated example, the bolt head portion 31 has a portion shaped like a circular column on the side facing away from the intermediate axial portion 33 in the axial direction DA. This circular-columnar portion can be made by, for example, cutting the head of a common bolt. As shown in Figs. 7A and 7B, the amplifier circuit board 35 is provided on this circular-columnar portion. As indicated by the double dotted line in Fig. 7A, a casing 37 may be provided on the surface of the bolt head portion 31 facing away from the intermediate axial portion 33. The casing 37 serves as a cover enclosing the amplifier circuit board 35, thereby protecting the amplifier circuit board 35.

The amplifier circuit board 35 is electrically connected to the physical change detecting unit 40 via a wiring 36. In other words, the wiring 36 electrically couples together the amplifier circuit board 35 and the physical change detecting unit 40. The amplifier circuit board 35 includes an amplifier circuit. The amplifier circuit in the amplifier circuit board 35 is configured to amplify the electrical signal indicating the physical change experienced by the bolt body 30A, which is produced by the physical change detecting unit 40. The amplifier circuit board 35 is electrically connected to a control device 110 via wiring or wirelessly. Stated differently, the electrical signal indicating the result of the measurement output from the physical change detecting unit 40 is transmitted to the control device 110 after amplified by the amplifier circuit board 35. The control device 110 monitors the electric signal output from the physical change detecting unit 40, so that it can detect deformation of the bolt body 30A. Based on the result of the measurement by the physical change detecting unit 40, the control device 110 controls the constituent elements of the wind turbine 101, such as the drive device bodies 20.

As described above, the through hole 31a is formed in the bolt head portion 31 and open at the base-end-side widened portion 33A. The wiring 36 is routed through the through hole 31a and extends to reach the amplifier circuit board 35.

As shown in Figs. 7A and 7B, the physical change detecting unit 40 is positioned in the through hole 22a formed in the flange 22 of the driving device body 20 (the first member M1). In other words, the physical change detecting unit 40 is not positioned in the threaded hole 103c provided in the nacelle 103 (the second member M2). Stated differently, the physical change detecting unit 40 is provided in a region of the bolt-type sensor device 30 that is not fixedly attached to the nacelle 103 (the second member M2). Accordingly, the physical change detecting unit 40 is provided not on a portion of the bolt-type sensor device 30 that is prevented from deforming but on a portion of the bolt-type sensor device 30 that is allowed to be deformed, more preferably, a portion of the bolt-type sensor device 30 that is likely to deform. Furthermore, in the fastening structure FS, the inner diameter of the through hole in the first member M1 through which the bolt-type sensor device 30 passes is larger than the inner diameter of the threaded hole in the second member M2 with which the bolt-type sensor device 30 meshes. Accordingly, since the physical change detecting unit 40 is positioned in the through hole 22a in the first member M1, the physical change detecting unit 40 can be effectively prevented from touching the fastening structure FS.

Next, the operations of the wind turbine driving devices 10 configured as above will be now described.

In the wind turbine 101 configured as above, when the moving parts such as the nacelle 103 and blades 105 are rotated, the plurality of wind turbine driving devices 10 included in each wind turbine driving device unit 5 are operated in a synchronized manner. In this manner, the nacelle 103 and blades 105, which are heavy objects, can be turned relative to the tower 102 and rotor 104, respectively. Each wind turbine driving device 10 operates based on a control signal sent from the control device 110.

In the moving parts of the wind turbine 101, only one or some of the wind turbine driving devices 10 included in each wind turbine driving device unit 5 may fail, and these failing wind turbine driving devices 10 may remain suspended. Moreover, such an irregularity may be sensed with a delay, and the control device 110 may transmit a drive signal to the wind turbine driving devices 10 included in each wind turbine driving device unit 5. If such an irregularity occurs, the meshing portion 24a of the failing one or some of the wind turbine driving devices 10 meshes with the ring gear 107, which restricts the movement of the moving parts. Accordingly, if the meshing portion 24a of the other normally functioning wind turbine driving devices 10 included in each wind turbine driving device unit 5 moves, a large stress is generated between the meshing portion 24a of the wind turbine driving devices 10 and the ring gear 107. If the irregularity of the wind turbine driving devices 10 is not promptly sensed, the wind turbine driving devices 10 or ring gear 107 may break down. If any one or more of the wind turbine driving devices 10 break down, the broken one or more of the wind turbine driving devices 10 are replaced. In this way, the wind turbine 101 can be brought back into operation again. If the ring gear 107 or the components of the tower 102 surrounding the ring gear 107 break down, on the other hand, large-scale repair work is required. This prevents the wind turbine from operating for a long time and accordingly causes enormous loss.

The inventors of the present invention intensely examined the above problem to avoid the same. They have proved that the condition of the fastening target object fastened via the bolt may be evaluated by measuring a physical change experienced by the bolt to detect a change in load applied to the bolt. In the case of the wind turbine driving device 10, the irregularity of the fastening target object can be detected by monitoring a physical change of the bolt constituting the fastening structure. As a result of further careful examination, however, the inventors of the present invention have found that a change in load that is required to be detected in order to prevent future damage and destruction of the fastening target object is much smaller than the magnitude of the axial load applied to the bolt when the fastening target object is appropriately fastened, in other words, the magnitude of the axial force applied when the fastening target object is fastened. This means it is difficult to detect a slight change in load applied to the bolt observed when an irregularity occurs in the fastening target object even by providing a physical change detecting unit in a conventional bolt, which continuously requires a certain strength to serve as a fastening member.

To address this issue, the wind turbine driving device 10 relating to the present embodiment includes the bolt-type sensor devices 30 described above, in place of at least some of the regular bolts B used to fixedly attach the driving device body 20 to the nacelle 103. The bolt-type sensor devices 30 each include the physical change detecting unit 40 provided on the intermediate axial portion 33 of the bolt body 30A and for detecting a physical change experienced by the intermediate axial portion 33. The intermediate axial portion 33 is interposed between the top end portion 32 and the bolt head portion 31 in the axial direction DA and thinner than the bolt head portion 31 and the top end portion 32. With such a design, if an irregularity occurs in the driving device body 20, this causes a tensile force, a compressive force, a bending force and other types of external forces to act on the bolt body 30A of the bolt-type sensor device 30, a larger physical change may occur in the intermediate axial portion 33 than in the bolt head portion 31 or top end portion 32. In other words, even if an irregularity occurring in the driving device body 20 resultantly applies only a slight external force to the bolt-type sensor device 30, the intermediate axial portion 33 is likely to experience a larger physical change. Therefore, a slight external force resulting from an initial irregularity of the driving device body 20 can be highly accurately measured by the physical change detecting unit 40 in the form of deformation of the intermediate axial portion 33. As a result, the physical change detecting unit 40 can not only promptly and accurately detect damage actually occurring in the driving device body 20 but also quantitatively evaluate the condition of the wind turbine driving device 10, thereby highly sensitively detect an initial irregularity that may result in future damage. With the above design, the present embodiment can effectively avoid unexpected and inevitable suspension of the wind turbine operation. Furthermore, the present embodiment can not only effectively avoid large-scale repair work caused by damage of the ring gear 107 and long-term shut down of the wind turbine 101, but also achieve increased lifetime of the driving device bodies 20, wind turbine driving devices 10, wind turbine driving device units 5, and wind turbine 101 through appropriate timing of the maintenance work.

As has been described above, not according to the invention, the application of the bolt-type sensor device 30 is not limited to the wind-turbine driving device 10, but the bolt-type sensor device 30 can be also applied to a variety of driving devices. In addition, the bolt-type sensor device 30 is used to constitute the fastening structure FS when combined with the first member M1 having the through hole 22a provided therein through which the bolt-type sensor device 30 passes and the second member M2 having the threaded hole 103c provided therein and configured to mesh with the top end portion 32 of the bolt-type sensor device 30. When employing the bolt-type sensor device 30, any fastening structure FS can produce the same advantageous effects as in the specific example where the bolt-type sensor device 30 is applied to the wind turbine 101. Specifically, the fastening structure FS can monitor the deformation of the bolt-type sensor device 30 to evaluate the magnitude of the external force applied to the first and second members M1 and M2 and the deformation of the first and second members M1 and M2, to highly sensitively detect an irregularity of the fastening structure FS.

The bolt body 30A preferably satisfies the following expressions (1) and (2).

$$0.15 \times AC \leq AA \leq 0.80 \times AC...(1)$$

$$1.5 \times D \leq LX...(2)$$

In the expressions (1) and (2), LX (mm) denotes the length of the threaded portion 32A in the axial direction DA, D denotes the maximum width of the threaded portion 32A of the top end portion 32 in the direction orthogonal to the axial direction DA, AC (mm$^2$) denotes the maximum cross-sectional area of the threaded portion 32A of the top end portion 32 when the threaded portion 32A is cut along the plane orthogonal to the axial direction DA, and AA (mm$^2$) denotes the minimum cross-sectional area of the intermediate axial portion 33 when the intermediate axial portion 33 is cut along the plane orthogonal to the axial direction DA.

The maximum cross-sectional area AC (mm$^2$) of the threaded portion 32A of the top end portion 32 when the threaded portion 32A is cut along the plane orthogonal to the axial direction DA is expressed as $R \times R \times \pi$ (the ratio of the circumference to the diameter), where R denotes the radius (mm) of an imaginary cylinder touching the crest of the threaded portion 32A, in other words, the maximum radius of the threaded portion. Here, the symbol "$\pi$" denotes the ratio of the circumference to the diameter. In the example shown in Figs. 6 to 7B, the minimum cross-sectional area AA (mm$^2$) of the intermediate axial portion 33 when the intermediate axial portion 33 is cut along the plane orthogonal to the axial direction DA is the area of the cross-section in the plane passing through the pair of opposing placement surfaces 33BB. In the example shown in Figs. 6 to 7B, the maximum width D (mm) of the threaded portion 32A of the top end portion 32 in the direction orthogonal to the axial direction DA is the crest-to-crest diameter of the threaded portion 32A.

When the bolt body 30A satisfies both of the expressions (1) and (2), the threaded portion 32A of the bolt body 30A can be stably secured in the threaded hole 103c and is capable of facilitating a physical change in the intermediate axial portion 33. In other words, when the condition of the fastening target object changes, the intermediate axial portion 33 is likely to experience a change in physical properties. This means that, when aging-induced degradation and external force application slightly change the condition of the fastening target object, this slight change may result in a large physical change in the intermediate axial portion 33. The physical change of the intermediate axial portion 33 can be detected by the physical change detecting unit 40 provided on the intermediate axial portion 33. In this manner, the result of the detection done by the physical change detecting unit 40 can tell a change in condition of the fastening target object caused by aging-induced degradation and external force application.

In addition, in the specific example illustrated, the bolt-type sensor device 30 includes, at the end of the intermediate axial portion 33 facing the bolt head portion 31, the base-end-side widened portion 33A gradually becoming thicker toward the bolt head portion 31. According to this specific example, the connection between the intermediate axial portion 33 and the bolt head portion 31 can effectively avoid stress gathering. Consequently, the bolt-type sensor device 30 can be effectively prevented from being damaged or broken. Furthermore, a physical change is likely to occur in a portion of the intermediate axial portion 33 other than the base-end-side widened portion 33A, so that the physical change detecting unit 40 provided on this portion is capable of sensitively detecting a physical change experienced by the intermediate axial portion 33.

In the specific example illustrated, the bolt-type sensor device 30 has the through hole 31a that penetrates thorough the bolt head portion 31 and that is open at the base-end-side widened portion 33A. According to this specific example, the through hole 31a penetrating through the bolt head portion 31 can serve as a routing path of the wiring 36 electrically connected to the physical change detecting unit 40 provided on the intermediate axial portion 33. The through hole 31a is open at the base-end-side widened portion 33A of the intermediate axial portion 33. This means that the opening of the through hole 31a is not found on the bottom surface of the bolt head portion 31, which is pressed against the flange 22 or the fastening target object. Accordingly, the wiring 36 routed through the through hole 31a can be effectively prevented from breaking down as it is caught between the bolt head portion 31 and the fastening target object.

In addition, in the specific example illustrated, the intermediate axial portion 33 of the bolt-type sensor device 30 includes, at the end thereof facing the top end portion 32, the top-end-side widened portion 33C gradually becoming thicker toward the top end portion 32. According to this specific example, the connection between the intermediate axial portion 33 and the top end portion 32 can effectively avoid stress gathering. Consequently, the bolt-type sensor device 30 can be effectively prevented from being damaged or broken. Furthermore, a physical change is likely to occur in a portion of the intermediate axial portion 33 other than the top-end-side widened portion 33C, so that the physical change detecting unit 40 provided on this portion is capable of sensitively detecting a physical change experienced by the intermediate axial portion 33.

In the specific example illustrated, the intermediate axial portion 33 includes the plurality of placement surfaces 33BB that are all positioned at the same position in the axial direction DA and that are flat surfaces parallel to the axial direction DA. The plurality of placement surfaces 33BB are symmetrically positioned with respect to the central axis CA. The plurality of placement surfaces 33BB each have the physical change detecting unit 40 provided thereon. Since the placement surfaces 33BB having the physical change detecting unit 40 arranged thereon are symmetrically positioned, the physical change detecting unit 40 arranged on any one of the placement surfaces 33BB can detect a large physical change experienced by the intermediate axial portion 33. In addition, since the placement surfaces 33BB are flat, the physical change detecting unit 40 can detect not only a tensile or compressive force applied to the bolt body 30A but also a bending force. Furthermore, since the placement surfaces 33BB are flat, the physical change detecting unit 40 can be easily installed.

According to the specific example illustrated, the intermediate axial portion 33 includes the pair of placement surfaces 33BB that are flat surfaces parallel to the axial direction DA and that face each other in a direction orthogonal to the axial direction DA. The plurality of placement surfaces 33BB each have the physical change detecting unit 40 provided thereon. According to this specific example, the physical change detecting unit 40 is capable of highly sensitively detecting a physical change caused by a tensile force, a compressive force, a bending force and the like applied to the bolt-type sensor device 30 and experienced by the bolt-type sensor device 30. Furthermore, since the placement surfaces 33BB are flat, the physical change detecting unit 40 can be easily installed.

According to the specific example illustrated, the width of the intermediate axial portion 33 in the direction of the normal to the placement surfaces 33BB takes a minimum value in a region defined in the axial direction DA where the placement surfaces 33BB are positioned. In this specific example, a physical change is likely to occur in a region of the intermediate axial portion 33 where the placement surfaces 33BB are formed. The physical change detecting unit 40 provided on such placement surfaces 33BB can detect a physical change experienced by the intermediate axial portion 33.

Furthermore, according to the specific example illustrated, the physical change detecting unit 40 of the bolt-type sensor device 30 is positioned between the top end portion 32 and the middle 33X of the intermediate axial portion 33 in the axial direction DA. In this specific example, the threaded portion 32A meshes with the threaded hole 103c in the nacelle 103, which constitutes the second member M2 of the fastening structure FS, so that the threaded portion 32A is fixedly attached to the second member M2. This means that, in this specific example, the physical change detecting unit 40 is positioned on a portion of the intermediate axial portion 33 that is likely to surrender to bending deformation. With such a design, the physical change detecting unit 40 is capable of highly sensitively detecting bending deformation of the bolt-type sensor device 30.

Furthermore, in the specific example illustrated, the bolt-type sensor device 30 has the amplifier circuit board 35 electrically connected to the physical change detecting unit 40 on a surface of the bolt head portion 31 facing away from the intermediate axial portion 33. Such a specific example can reduce the length of the wiring 36 used to couple the amplifier circuit board 35, which constitutes an amplifier circuit in the vicinity of the physical change detecting unit 40. With such a design, the electrical signal output from the physical change detecting unit 40 can be amplified by the amplifier circuit with a small quantity of noise, so that the magnitude of the deformation of the bolt-type sensor device 30 can be highly accurately detected.

In the specific example illustrated, when the bolt-type sensor device 30 is projected in the axial direction DA, the amplifier circuit board 35 is accommodated within a region overlapping the bolt head portion 31. According to such a specific example, the amplifier circuit board 35 constituting the amplifier circuit can effectively avoid touching external elements.

In one embodiment described above, the bolt-type sensor device 30 has the top end portion 32 having the threaded portion 32A, the bolt head portion 31 thicker than the threaded portion 32A, and the intermediate axial portion 33 situated between the top end portion 32 and the bolt head portion 31. The intermediate axial portion 33 is thinner than the threaded portion 32A. This means that the intermediate axial portion 33 is more likely to experience a physical change than the bolt head portion 31 and the top end portion 32. In particular, the intermediate axial portion 33 is more likely to experience a physical change than the top end portion 32, which has the threaded portion 32A. Accordingly, the intermediate axial portion 33 is more likely to experience a physical change when acted upon by an external force than the axial portion of regular bolts. Accordingly, when aging-induced degradation and external force application slightly change the condition of the fastening target object, this slight change may result in a larger physical change in the intermediate axial portion 33. The physical change of the intermediate axial portion 33 can be detected by the physical change detecting unit 40 provided on the intermediate axial portion 33. In this manner, the result of the detection done by the physical change detecting unit 40 can tell a change in condition of the fastening target object caused by aging-induced degradation and external load application. As a result, the lifetime of the fastening target object can be estimated and loosening of the bolt can be detected.

As is described in the above specific example, the condition of the wind turbine driving device 10 can be quantitatively evaluated by using one or more bolt-type sensor devices 30 in place of at least one or more of the numerous bolts used to fasten the wind turbine driving device 10. This makes it possible to not only detect sudden failures but also predict when failures may occur in the future as time goes by. Accordingly, the use of the bolt-type sensor device 30 enables effective avoidance of the damage of the wind turbine driving device 10 and the ring gear 107. Since only some of the numerous bolts used to fasten the wind turbine driving device 10 are replaced with the bolt-type sensor devices 30, for example, the condition of the wind turbine driving device 10 can be quantitatively evaluated with it being possible to rigidly fastening the wind turbine driving device 10 to the fastening target object.

In addition, as described above in relation to one embodiment, the fastening structure FS includes the bolt-type sensor device 30 relating to the embodiment, the first member M1 (the driving device body 20) having the through hole 22a provided therein through which the bolt-type sensor device 30 passes and the second member M2 (the nacelle 103) having the threaded hole 103c provided therein and configured to mesh with the top end portion 32 of the bolt-type sensor device 30. In one specific example of the above-described embodiment, the physical change detecting unit 40 is positioned in the through hole 22a in the first member M1. According to this specific example, detecting the physical deformation of the bolt-type sensor device 30 can result in highly accurately evaluating the magnitude of the external force applied to the first and second members M1 and M2 fastened together with the use of the bolt-type sensor device 30 and the condition of the first and second members M1 and M2 fastened together. In addition, since the internal diameter of the through hole 22a is typically larger than the internal diameter of the threaded hole, this can effectively prevent, in the thorough hole 22a, the physical change detecting unit 40 from touching the first member M1. With such a design, the physical change detecting unit 40 can be effectively prevented from breaking down, so that the magnitude of the deformation of the bolt-type sensor device 30 can be stably detected.

While the foregoing has described the embodiment with reference to a specific example, the specific example is not intended to limit the embodiment. The foregoing embodiment can be implemented in various other specific forms and is susceptible to omission, replacement, modification and addition of various elements thereof within the purport of the invention.

With reference to the appended drawings, the following describes a modification example. In the following description and the drawings used therein, parts that can be configured in a similar manner to those in the foregoing specific example are denoted by the same reference signs as those in the foregoing specific example and are not described again.

In the specific example shown in Figs. 6, 7A and 7B, the pair of placement surfaces 33BB are provided that face each other in the second direction DB2, and the physical change detecting unit 40 is provided on each of the placement surfaces 33BB. The present embodiment is not limited to this example. There may be three or more placement surfaces 33BB. Furthermore, in the specific example shown in Figs. 6, 7A and 7B, the plurality of placement surfaces 33BB are all positioned only at the same position in the axial direction DA, but the present embodiment is not limited to this example. The placement surfaces 33BB may be provided at more than one position defined in the axial direction DA. Furthermore, in the specific example shown in Figs. 6, 7A and 7B, the placement surfaces 33BB are positioned between the top end portion 32 and the middle 33X of the intermediate axial portion 33 in the axial direction DA, but the present embodiment is not limited to this example. The placement surfaces 33BB may be provided between the middle 33X and the bolt head portion 31.

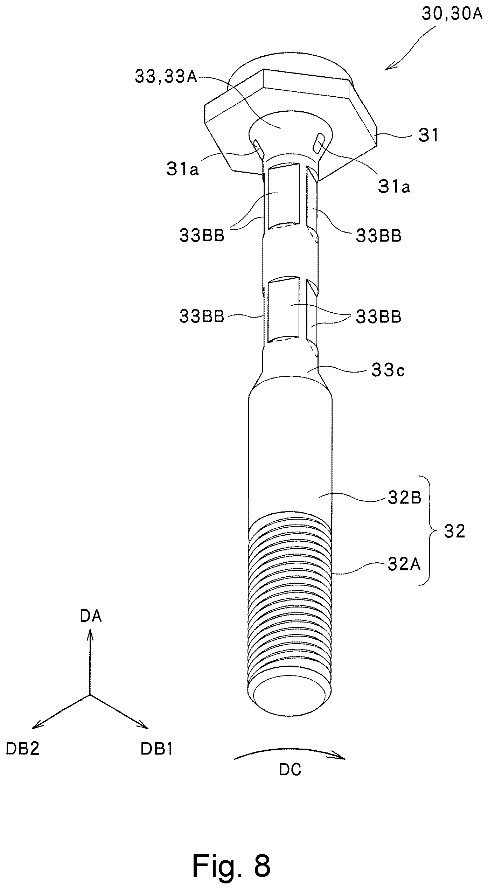

In the example shown in Figs. 8 and 9, the intermediate axial portion 33 has a plurality of placement surfaces 33BB. The placement surfaces 33BB are each a flat surface parallel to the axial direction DA. The placement surfaces 33BB are orthogonal to the radial direction of the circle centered on the central axis CA. Each placement surface 33BB has a single physical change detecting unit 40 provided thereon. Some of the placement surfaces 33BB are positioned in a base-end-side region A1 of the intermediate axial portion 33 that is between the bolt head portion 31 and the middle 33X of the intermediate axial portion 33 in the axial direction DA. The rest of the placement surfaces 33BB are positioned in a top-end-side region A2 of the intermediate axial portion 33 that is between the top end portion 32 and the middle 33X of the intermediate axial portion 33 in the axial direction DA. The placement surfaces 33BB in the base-end-side region A1 are positioned at the same position in the axial direction DA. The placement surfaces 33BB in the base-end-side region A1 are arranged at even intervals in the circumferential direction. In the base-end-side region A1, a pair of placement surfaces 33BB facing each other in the first direction DB1 and another pair of placement surfaces 33BB facing each other in the second direction DB2 are provided. Likewise, the placement surfaces 33BB in the top-end-side region A2 are positioned at the same position in the axial direction DA. The placement surfaces 33BB in the top-end-side region A2 are arranged at even intervals in the circumferential direction. In the top-end-side region A2, a pair of placement surfaces 33BB facing each other in the first direction DB1 and another pair of placement surfaces 33BB facing each other in the second direction DB2 are provided. Stated differently, two placement surfaces 33BB are arranged next to each other in the axial direction DA on the intermediate axial portion 33.

According to the example shown in Figs. 8 and 9, the physical change detecting units 40 are provided on the intermediate axial portion 33 such that they are spaced away from each other in the axial direction DA. In this specific example, any one of the physical change detecting units 40 dispersed in the axial direction DA can be used to highly accurately evaluate the magnitude of the force applied to the bolt-type sensor device 30. Consequently, the physical change detecting unit 40 provided on any one of the placement surfaces 33BB can detect a large physical change experienced by the intermediate axial portion 33.

According to the example shown in Figs. 8 and 9, since the physical change detecting units 40 are provided in the base-end-side region A1 of the intermediate axial portion 33 that is between the bolt head portion 31 and the middle 33X in the axial direction DA, this can contribute to reduce the length of the wiring 36 extending from these physical change detecting units 40 to the amplifier circuit board 35. As the transmission path through the wiring 36 increases, the noise included in the electrical signal output from the physical change detecting units 40 increases. With such a design, the electrical signal output from the physical change detecting units 40 in the base-end-side region A1 has a reduced amount of noise when amplified by the amplifier circuit. In addition, the threaded portion 32A meshes with the threaded hole 103c in the nacelle 103, which constitutes the second member M2 of the fastening structure FS, so that the threaded portion 32A is fixedly attached to the second member M2. Accordingly, the base-end-side region A1 of the intermediate axial portion 33 is less likely to experience bending deformation. As a consequence, the physical change detecting units 40 in the base-end-side region A1 are capable of highly sensitively detecting other types of physical changes of the bolt-type sensor device 30 than bending deformation, for example, tensile deformation.

On the other hand, the physical change detecting units 40 in the top-end-side region A2 of the intermediate axial portion 33 that is between the top end portion 32 and the middle 33X in the axial direction DA are capable of highly accurately evaluate the magnitude of the bending force applied to the bolt-type sensor device 30, as described previously.

When there are a plurality of physical change detecting units 40, the results of the detection done by the physical change detecting units 40 can be collectively used to estimate how load is applied to the bolt-type sensor device 30. In other words, when the plurality of physical change detecting units 40 are provided at the same position in the axial direction DA and dispersed in the circumferential direction DC, it is possible to identify the direction of the bending force applied to the bolt body 30A. Similarly, when the plurality of physical change detecting units 40 are spaced away from each other in the axial direction DA, it is possible to identify which one of a bending force, a tensile force, a shear force and other types of forces is applied to the bolt body 30A.

Unlike the above-described example shown in Figs. 6, 7A and 7B, the bolt-type sensor device 30 may include only one physical change detecting unit 40 in an example not according to the invention. In this example, a pair of placement surfaces 33BB may be provided, and the physical change detecting unit 40 may be provided on one of the placement surfaces 33BB. As another example, only one placement surface 33BB may be provided, and the physical change detecting unit 40 may be provided on this placement surface 33BB.

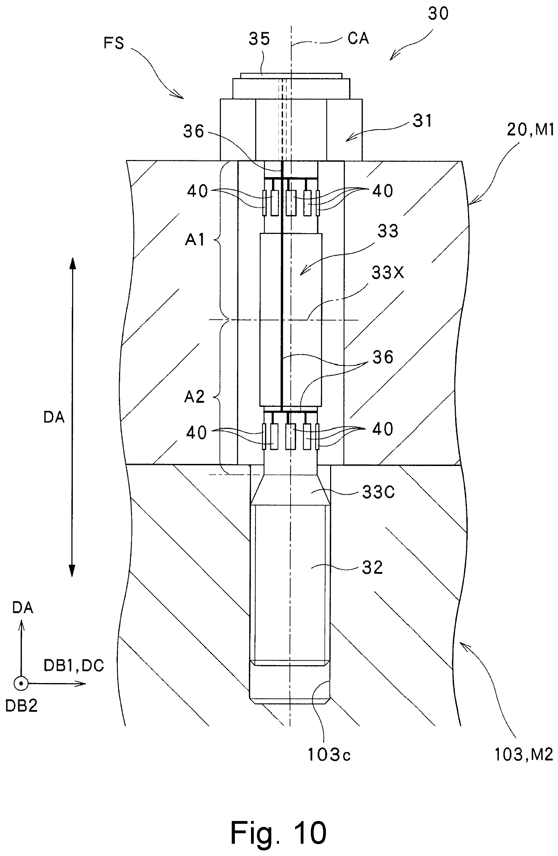

According to the specific example described above, the physical change detecting units 40 are provided on the placement surfaces 33BB that are flat and parallel to the axial direction DA but the present embodiment is not limited to such. In the example shown in Fig. 10 not according to the invention, the physical change detecting units 40 are provided on a cylindrical surface. In the example shown in Fig. 10, eight physical change detecting units 40 are provided on a cylindrical surface that is on the bolt head portion 31 side with respect to the middle 33X in the axial direction DA, and eight physical change detecting units 40 are provided on a cylindrical surface that is on the top end portion 32 side with respect to the middle 33X in the axial direction DA.

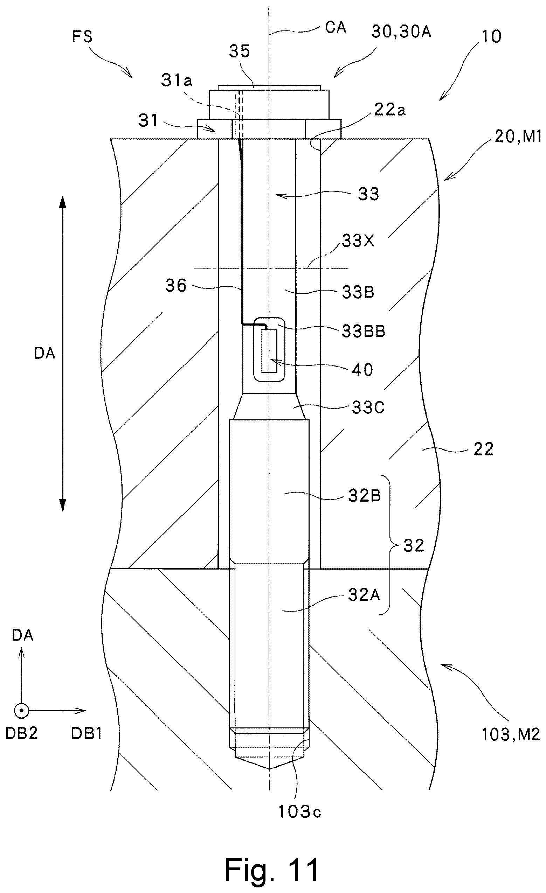

In the above-described example, the intermediate axial portion 33 includes, along with the body portion 33B, the base-end-side widened portion 33A and the top-end-side widened portion 33C. The present embodiment, however, is not limited to such and can go without one or both of the base-end-side widened portion 33A and the top-end-side widened portion 33C. In the example shown in Fig. 11, for example, the bade-end-side widened portion 33A is not provided.

In the above-described example, the through hole 31a in the bolt head portion 31 is open at the base-end-side widened portion 33A, but the present embodiment is not limited to such. As an alternative example, in the example shown in Fig. 11 where the base-end-side widened portion 33A is not provided, the through hole 31a is open at the bottom surface of the bolt head portion 31. As shown in Fig. 11, however, the through hole 31a preferably has an opening within a region overlapping the top end portion when projected in the axial direction DA. With the opening being arranged in this manner, the wiring 36 routed through the through hole 31a and electrically connected to the physical change detecting units 40 can be effectively prevented from breaking down as it is caught between the bolt head portion 31 and the fastening target object.

**Claims**

1. A wind turbine driving device (10) comprising:
   a driving device body (20) installed in one structure at a moving part of a wind turbine (101), the driving device body (20) including a meshing portion (24a) meshing with a ring gear (107) installed in another structure at the moving part of the wind turbine (101); and
   a bolt-type sensor device (30) comprising:

   a top end portion (32) having a threaded portion (32A);
   a bolt head portion (31) thicker than the threaded portion (32A);
   an intermediate axial portion (33) positioned between the top end portion (32) and the bolt head portion (31), the intermediate axial portion (33) being thinner than the threaded portion (32A); and
   a physical change detecting unit (40) provided on the intermediate axial portion (33), the physical change detecting unit (40) being configured to detect a physical change experienced by the intermediate axial portion (33),
   the bolt-type sensor device (30) fixedly attaching the driving device body (20) to the one structure,
   the bolt-type sensor device (30) being used as a bolt fixedly attaching the driving device body (20) to the one structure,
   the driving device body (20) having a through hole provided therein, the bolt-type sensor device (30) passing through the through hole, and the one structure having a threaded hole provided therein, the threaded hole being configured to mesh with the top end portion (32) of the bolt-type sensor device ;
   the wind turbine driving device (10) **characterised in that**
   the intermediate axial portion (33) of the bolt-type sensor device (30) has a plurality of placement surfaces (33BB) that are positioned at the same position in an axial direction (DA) and that are flat surfaces parallel to the axial direction (DA), wherein the plurality of placement surfaces (33BB) are symmetrically positioned with respect to a central axis (CA), and wherein the plurality of placement surfaces (33BB) each have the physical change detecting unit (40) provided thereon.

2. The wind turbine driving device (10) of claim 1,

   wherein the bolt head portion (31) has a hole (31a) penetrating therethrough, and
   wherein, when projected in an axial direction (DA), the hole (31a) has an opening within a region overlapping the top end portion (32).

3. The wind turbine driving device (10) of claim 2,

   wherein the intermediate axial portion (33) has, at an end thereof facing the bolt head portion (31), a base-end-side widened portion (33A) gradually becoming thicker toward the bolt head portion (31), and

wherein the hole (31a) is open at the base-end-side widened portion (33A).

4. The wind turbine driving device (10) of any one of claims 1 to 3, wherein the intermediate axial portion (33) has, at an end thereof facing the top end portion (32), a top-end-side widened portion (33C) gradually becoming thicker toward the top end portion (32).

5. The wind turbine driving device (10) of any one of claims 1 to 4,

wherein the intermediate axial portion (33) has a pair of placement surfaces (33BB) that are flat surfaces parallel to an axial direction (DA) and that face each other in a direction orthogonal to the axial direction (DA), and

wherein the placement surfaces (33BB) each have the physical change detecting unit (40) provided thereon.

6. The wind turbine driving device (10) of claim 4 or 5, wherein a width of the intermediate axial portion (33) in a direction of a normal to the placement surfaces (33BB) takes a minimum value in a region defined in an axial direction (DA) where the placement surfaces (33BB) are positioned.

7. The wind turbine driving device (10) of any one of claims 1 to 6, wherein the physical change detecting unit (40) is positioned between the bolt head portion (31) and a middle (33X) of the intermediate axial portion (33) in an axial direction (DA).

8. The wind turbine driving device (10) of any one of claims 1 to 7, wherein the physical change detecting unit (40) is positioned between the top end portion (32) and a middle (33X) of the intermediate axial portion (33) in an axial direction (DA).

9. The wind turbine driving device (10) of any one of claims 1 to 8, wherein the physical change detecting unit (40) includes a plurality of physical change detecting units (40) arranged next to each other in an axial direction (DA).

10. The wind turbine driving device (10) of any one of claims 1 to 9, wherein the physical change detecting unit (40) is electrically connected to an amplifier circuit board (35), and the amplifier circuit board (35) is positioned opposite to the intermediate axial portion (33) with respect to the bolt head portion (31).

11. The wind turbine driving device (10) of claim 10, wherein, when projected in an axial direction (DA), the amplifier circuit board (35) is accommodated within a region overlapping the bolt head portion (31).

12. The wind turbine driving device (10) of any one of claims 1 to 11, wherein $0.15 \times AC \leq AA \leq 0.80 \times AC$ and $1.5 \times D \leq LX$ are satisfied where LX (mm) denotes a length of the threaded portion (32A), AC ($mm^2$) denotes a maximum cross-sectional area of the threaded portion (32A), AA ($mm^2$) denotes a minimum cross-sectional area of the intermediate axial portion (33) and D (mm) denotes a maximum width of the threaded portion (32A).

13. A wind turbine (101) comprising the wind turbine driving device (10) of any of claims 1 to 12.

**Patentansprüche**

1. Eine Windturbinenantriebsvorrichtung (10), umfassend:

einen Antriebsvorrichtungskörper (20), der in einer Struktur an einem beweglichen Teil einer Windturbine (101) installiert ist, wobei der Antriebsvorrichtungskörper (20) einen Eingriffsabschnitt (24a) enthält, der mit einem Ringzahnrad (107) in Eingriff steht, das in einer anderen Struktur am beweglichen Teil der Windturbine (101) installiert ist; und

eine bolzenartige Sensorvorrichtung (30), die umfasst:

einen oberen Endabschnitt (32), der einen Gewindeabschnitt (32A) aufweist;

einen Bolzenkopfabschnitt (31), der dicker ist als der Gewindeabschnitt (32A);

einen mittleren axialen Abschnitt (33), der zwischen dem oberen Endabschnitt (32) und dem Bolzenkopfabschnitt (31) positioniert ist, wobei der mittlere axiale Abschnitt (33) dünner ist als der Gewindeabschnitt (32A); und

eine Detektionseinheit einer physikalischen Änderung (40), die an dem mittleren axialen Abschnitt (33) vorgesehen ist, wobei die Detektionseinheit einer physikalischen Änderung (40) so konfiguriert ist, dass sie eine physikalische Änderung detektiert, die der mittlere axiale Abschnitt (33) erfährt,

wobei die bolzenartige Sensorvorrichtung (30) den Antriebsvorrichtungskörper (20) fest an der einen Struktur anbringt, wobei die bolzenartige Sensorvorrichtung (30) als ein Bolzen verwendet wird, der den Antriebsvorrichtungskörper (20) an der einen Struktur fest anbringt, wobei

der Antriebsvorrichtungskörper (20) darin ein Durchgangsloch aufweist, die bolzenartige Sensorvorrichtung (30) durch das Durchgangsloch hindurchgeht und die eine Struktur ein Gewindeloch darin vorgesehen aufweist, wobei das Gewindeloch so konfiguriert ist, dass es mit dem oberen Endabschnitt (32) der bolzenartigen Sensorvorrichtung (30) in Eingriff kommt; wobei die Windturbinenantriebsvorrichtung (10) **dadurch gekennzeichnet ist, dass** der mittlere axiale Abschnitt (33) der bolzenartigen Sensorvorrichtung (30) eine Vielzahl von Platzierungsflächen (33BB) aufweist, die an derselben Position in einer axialen Richtung (DA) angeordnet sind und die flache Oberflächen parallel zur axialen Richtung (DA) sind, wobei die Vielzahl von Platzierungsflächen (33BB) symmetrisch in Bezug auf eine Mittelachse (CA) angeordnet sind, und wobei die Vielzahl von Platzierungsflächen (33BB) jeweils die Detektionseinheit einer physikalischen Änderung (40) daran vorgesehen aufweisen.

2. Die Windturbinenantriebsvorrichtung (10) nach Anspruch 1,

   wobei der Bolzenkopfabschnitt (31) ein durch dadurch hindurchgehendes Loch (31a) aufweist und wobei das Loch (31a), wenn es in einer axialen Richtung (DA) projiziert wird, eine Öffnung innerhalb eines Bereichs aufweist, der den oberen Endabschnitt (32) überlappt.

3. Die Windturbinenantriebsvorrichtung (10) nach Anspruch 2,

   wobei der mittlere axiale Abschnitt (33) an einem dem Bolzenkopfabschnitt (31) zugewandten Ende davon einen basisendseitigen verbreiterten Abschnitt (33A) aufweist, der zum Bolzenkopfabschnitt (31) hin graduell dicker wird, und wobei das Loch (31a) an dem basisendseitigen verbreiterten Abschnitt (33A) offen ist.

4. Die Windturbinenantriebsvorrichtung (10) nach einem der Ansprüche 1 bis 3, wobei der mittlere axiale Abschnitt (33) an einem dem oberen Endabschnitt (32) zugewandten Ende davon einen oberendseitigen verbreiterten Abschnitt (33C) aufweist, der zum oberen Endabschnitt (32) hin allmählich dicker wird.

5. Die Windturbinenantriebsvorrichtung (10) nach einem der Ansprüche 1 bis 4,

wobei der mittlere axiale Abschnitt (33) ein Paar von Platzierungsflächen (33BB) aufweist, die flache Oberflächen parallel zu einer axialen Richtung (DA) sind und die einander in einer Richtung orthogonal zur axialen Richtung (DA) zugewandt sind, und wobei die Platzierungsflächen (33BB) jeweils die Detektionseinheit einer physikalischen Änderung (40) daran vorgesehen aufweisen.

6. Die Windturbinenantriebsvorrichtung (10) nach Anspruch 4 oder 5, wobei eine Breite des mittleren axialen Abschnitts (33) in einer Richtung einer Normalen zu den Platzierungsflächen (33BB) einen Minimalwert in einem Bereich annimmt, der in einer axialen Richtung (DA) definiert ist, wo die Platzierungsflächen (33BB) positioniert sind.

7. Die Windturbinenantriebsvorrichtung (10) nach einem der Ansprüche 1 bis 6, wobei die Detektionseinheit einer physikalischen Änderung (40) zwischen dem Bolzenkopfabschnitt (31) und einer Mitte (33X) des mittleren axialen Abschnitts (33) in einer axialen Richtung (DA) positioniert ist.

8. Die Windturbinenantriebsvorrichtung (10) nach einem der Ansprüche 1 bis 7, wobei die Detektionseinheit einer physikalischen Änderung (40) zwischen dem oberen Endabschnitt (32) und einer Mitte (33X) des mittleren axialen Abschnitts (33) in einer axialen Richtung (DA) positioniert ist.

9. Die Windturbinenantriebsvorrichtung (10) nach einem der Ansprüche 1 bis 8, wobei die Detektionseinheit einer physikalischen Änderung (40) eine Vielzahl von Detektionseinheiten einer physikalischen Änderung (40) umfasst, die in einer axialen Richtung (DA) nebeneinander angeordnet sind.

10. Die Windturbinenantriebsvorrichtung (10) nach einem der Ansprüche 1 bis 9, wobei die Detektionseinheit einer physikalischen Änderung (40) elektrisch mit einer Verstärkerschaltungsplatte (35) verbunden ist und die Verstärkerschaltungsplatte (35) gegenüber dem mittleren axialen Abschnitt (33) in Bezug auf den Bolzenkopfabschnitt (31) positioniert ist.

11. Die Windturbinenantriebsvorrichtung (10) nach Anspruch 10, wobei die Verstärkerschaltungsplatte (35), wenn sie in einer axialen Richtung (DA) projiziert wird, in einem Bereich untergebracht ist, der den Bolzenkopfabschnitt (31) überlappt.

12. Die Windturbinenantriebsvorrichtung (10) nach einem der Ansprüche 1 bis 11, wobei $0{,}15 \times AC \leq AA \leq 0{,}80 \times AC$ und $1{,}5 \times D \leq LX$ erfüllt sind, wobei LX (mm) eine Länge des Gewindeabschnitts (32A) be-

zeichnet, AC (mm$^2$) eine maximale Querschnittsfläche des Gewindeabschnitts (32A) bezeichnet, AA (mm$^2$) eine minimale Querschnittsfläche des mittleren axialen Abschnitts (33) bezeichnet und D (mm) eine maximale Breite des Gewindeabschnitts (32A) bezeichnet.

13. Eine Windturbine (101), die die Windturbinenantriebsvorrichtung (10) von einem der Ansprüche 1 bis 12 umfasst.

## Revendications

1. Dispositif d'entraînement d'éolienne (10) comprenant :

   un corps de dispositif d'entraînement (20) installé dans une première structure au niveau d'une partie mobile d'une éolienne (101), le corps de dispositif d'entraînement (20) comprenant une partie d'engrènement (24a) s'engrenant avec une couronne dentée (107) installée dans une autre structure au niveau de la partie mobile de l'éolienne (101) ; et
   un dispositif capteur de type boulon (30) comprenant :

      une partie d'extrémité supérieure (32) ayant une partie filetée (32A) ;
      une partie de tête de boulon (31) plus épaisse que la partie filetée (32A) ;
      une partie axiale intermédiaire (33) positionnée entre la partie d'extrémité supérieure (32) et la partie de tête de boulon (31), la partie axiale intermédiaire (33) étant plus mince que la partie filetée (32A) ; et

      une unité de détection de changement physique (40) prévue sur la partie axiale intermédiaire (33), l'unité de détection de changement physique (40) étant configurée pour détecter un changement physique subi par la partie axiale intermédiaire (33),
      le dispositif capteur de type boulon (30) fixant de manière rigide le corps de dispositif d'entraînement (20) à la première structure, le dispositif capteur de type boulon (30) étant utilisé comme un boulon fixant de manière rigide le corps de dispositif d'entraînement (20) à la première structure,
      le corps de dispositif d'entraînement (20) ayant un trou traversant prévu dans celui-ci, le dispositif capteur de type boulon (30) passant à travers le trou traversant, et la première structure ayant un trou fileté prévu dans celle-ci, le trou fileté étant configuré pour s'engrener avec la partie d'extrémité supérieure (32) du dispositif capteur de type boulon ;
   le dispositif d'entraînement d'éolienne (10) étant **caractérisé en ce que**
   la partie axiale intermédiaire (33) du dispositif capteur de type boulon (30) a une pluralité de surfaces de placement (33BB) qui sont positionnées à la même position dans une direction axiale (DA) et qui sont des surfaces planes parallèles à la direction axiale (DA), dans lequel la pluralité de surfaces de placement (33BB) sont positionnées symétriquement par rapport à un axe central (CA), et dans lequel la pluralité de surfaces de placement (33BB) ont chacune l'unité de détection de changement physique (40) prévue sur celles-ci.

2. Dispositif d'entraînement d'éolienne (10) selon la revendication 1,

   dans lequel la partie de tête de boulon (31) a un trou (31a) qui la traverse, et
   dans lequel, lors de la projection dans une direction axiale (DA), le trou (31a) a une ouverture dans une région qui chevauche la partie d'extrémité supérieure (32).

3. Dispositif d'entraînement d'éolienne (10) selon la revendication 2,

   dans lequel la partie axiale intermédiaire (33) a, au niveau d'une extrémité de celle-ci faisant face à la partie de tête de boulon (31), une partie élargie côté extrémité de base (33A) qui s'épaissit progressivement vers la partie de tête de boulon (31), et
   dans lequel le trou (31a) est ouvert au niveau de la partie élargie côté extrémité de base (33A).

4. Dispositif d'entraînement d'éolienne (10) selon l'une quelconque des revendications 1 à 3, dans lequel la partie axiale intermédiaire (33) a, au niveau d'une extrémité de celle-ci faisant face à la partie d'extrémité supérieure (32), une partie élargie côté extrémité supérieure (33C) qui s'épaissit progressivement vers la partie d'extrémité supérieure (32).

5. Dispositif d'entraînement d'éolienne (10) selon l'une quelconque des revendications 1 à 4,

   dans lequel la partie axiale intermédiaire (33) a une paire de surfaces de placement (33BB) qui sont des surfaces plates parallèles à une direction axiale (DA) et qui se font face dans une direction orthogonale à la direction axiale (DA), et
   dans lequel les surfaces de placement (33BB) ont chacune l'unité de détection de changement physique (40) prévue sur celles-ci.

**6.** Dispositif d'entraînement d'éolienne (10) selon la revendication 4 ou 5, dans lequel la largeur de la partie axiale intermédiaire (33) dans une direction normale aux surfaces de placement (33BB) prend une valeur minimale dans une région définie dans une direction axiale (DA) où les surfaces de placement (33BB) sont positionnées.

**7.** Dispositif d'entraînement d'éolienne (10) selon l'une quelconque des revendications 1 à 6, dans lequel l'unité de détection de changement physique (40) est positionnée entre la partie de tête de boulon (31) et un milieu (33X) de la partie axiale intermédiaire (33) dans une direction axiale (DA).

**8.** Dispositif d'entraînement d'éolienne (10) selon l'une quelconque des revendications 1 à 7, dans lequel l'unité de détection de changement physique (40) est positionnée entre la partie d'extrémité supérieure (32) et un milieu (33X) de la partie axiale intermédiaire (33) dans une direction axiale (DA).

**9.** Dispositif d'entraînement d'éolienne (10) selon l'une quelconque des revendications 1 à 8, dans lequel l'unité de détection de changement physique (40) comprend une pluralité d'unités de détection de changement physique (40) agencées les unes à côté des autres dans une direction axiale (DA).

**10.** Dispositif d'entraînement d'éolienne (10) selon l'une quelconque des revendications 1 à 9, dans lequel l'unité de détection de changement physique (40) est connectée électriquement à une carte de circuit amplificateur (35), et la carte de circuit amplificateur (35) est positionnée à l'opposé de la partie axiale intermédiaire (33) par rapport à la partie de tête de boulon (31).

**11.** Dispositif d'entraînement d'éolienne (10) selon la revendication 10, dans lequel, lors de la projection dans une direction axiale (DA), la carte de circuit amplificateur (35) est reçue dans une région chevauchant la partie de tête de boulon (31).

**12.** Dispositif d'entraînement d'éolienne (10) selon l'une quelconque des revendications 1 à 11, dans lequel $0,15 \times AC \leq AA \leq 0,80 \times AC$ et $1,5 \times D \leq LX$ sont satisfaits, où LX (mm) désigne la longueur de la partie filetée (32A), AC ($mm^2$) désigne l'aire de section maximale de la partie filetée (32A), AA ($mm^{22}$) désigne l'aire de section minimale de la partie axiale intermédiaire (33) et D (mm) désigne la largeur maximale de la partie filetée (32A).

**13.** Éolienne (101) comprenant le dispositif d'entraînement d'éolienne (10) selon l'une quelconque des revendications 1 à 12.

Fig. 1

Fig. 2

Fig. 3

Fig. 4

## Fig. 5

31

30,30A

33,33B

33BB

33,33C

32B

32

32A

DA

DB2    DB1

DC

Fig. 6

Fig. 7A

Fig. 7B

33,33A

30,30A

31

31a

31a

33BB     33BB

33BB     33BB

33c

32B

32

32A

DA

DB2          DB1

DC

## Fig. 8

Fig. 9

Fig. 10

Fig. 11

**EP 3 913 344 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3550141 A1
- US 4553124 A
- JP 2019215272 A
- JP 2016211497 A